# EUROPÄISCHE PATENTANMELDUNG

(11) **EP 0 647 949 A2**
(43) Veröffentlichungstag der Anmeldung: **12.04.1995**
(21) Anmeldenummer: 94112561.9
(22) Anmeldetag: 11.08.1994
(51) Int. Cl.: H01B 1/20

(54) **Fernsteuer-Set für Autoradio**

(30) Priorität: 11.10.1993 DE 4334565
(71) Anmelder: GRUNDIG E.M.V. Elektro-Mechanische Versuchsanstalt Max Grundig GmbH & Co. KG, D-90762 Fürth (DE)
(72) Erfinder: Sinning, Hans, Grundig E.M.V., D-90748 Fürth (DE); Saalfrank, Werner, Dr., Grundig E.M.V., D-90748 Fürth (DE); Baumgartner, Franz-Xaver., Grundig E.M.V., D-90748 Fürth (DE)

(57) **Zusammenfassung**

Die Einbaumöglichkeiten eines Autoradios in einem Kraftfahrzeug gewährleisten nicht immer eine ungehinderte Bedienung des Gerätes. In einzelnen Fällen ist es deshalb wünschenswert, die wichtigsten Gerätefunktionen über eine drahtlose Fernbedienung steuern zu können, deren Fernsteuer-Sender im unmittelbaren Zugriffsbereich des Fahrzeugführers angebracht ist.

Mit der vorliegenden Erfindung wird ein Autoradio offenbart, das mit Hilfe eines in einem abnehmbaren Bedienteil eingebauten Fernsteuer-Empfängers auch die nachträgliche Aufrüstung des Gerätes mit Fernbedienung erlaubt, ohne das Grundgerät mit zusätzlichem Schaltungsaufwand zu versehen.

## Beschreibung

Die Erfindung betrifft ein Autoradio mit abnehmbarem Bedienteil nach dem Oberbegriff des Patentanspruchs 1.

Die Abnehmbarkeit des Bedienteils eines Autoradios ist als Schutzmaßnahme gegen Gerätediebstahl seit langem bekannt. In der DE 36 24 716 C2 der Anmelderin ist ein Autorundfunkgerät offenbart, bei dem das Gerätehauptteil mit dem Bedienteil durch eine lösbare Verriegelung mechanisch und über verschiedene Kontaktstellen elektrisch verbunden ist, wobei die vollständige Gerätefunktion nur nach Programmierung einer geräteinternen Sperrschaltung über das Bedienteil gewährleistet ist.

Ebenso ist nach dem Stand der Technik die Fernbedienbarkeit von Geräten der Unterhaltungselektronik, zum Teil auch für den Gebrauch in Kraftfahrzeugen, bekannt. Der zugehörige Empfänger für die Fernbedienungssignale ist jedoch als fester Bestandteil der Funktionssteuerung im jeweiligen Gerät integriert, so daß für die Grundausstattung eines fernbedienbaren Gerätes ein erhöhter Schaltungsaufwand notwendig ist.

Die Bedienungsfreundlichkeit von Autoradios leidet häufig unter den begrenzten Einbaumöglichkeiten im Kraftfahrzeug, so daß nicht immer ein bequemer, unmittelbarer Zugriff zu den geräteseitigen Bedienelementen gegeben ist. Hier kann eine drahtlose Fernbedienung, die an geeigneter Stelle im Zugriffsbereich des Fahrers anbringbar ist, erhebliche Erleichterung verschaffen.

Es war deshalb Aufgabe der vorliegenden Erfindung, ein Autoradio mit einer Fernbedienungsmöglichkeit zu versehen, die für besondere Anwendungsfälle nachrüstbar ist, ohne das Rundfunkgerät in seiner Grundausstattung zu verteuern und ohne zusätzliche Service-Arbeiten für die Nachrüstung zu erfordern.

Außerdem sollte der zugehörige Fernbedienungssender eine die Aufmerksamkeit des Fahrers nicht beeinträchtigende Bedienung des Autoradios ermöglichen. Diese Aufgabe wurde durch die Merkmale der Patentansprüche 1 bis 3 gelöst.

Der Vorteil des im Patentanspruch 1 offenbarten Autoradios liegt darin, daß ein ohnehin als getrennter Baustein vorhandenes Bedienteil als Träger für den Fernsteuer-Empfänger verwendet wird, so daß das Grundgerät keinen zusätzlichen Schaltungsaufwand benötigt, wobei auch zusätzliche, durch die geräteseitigen Bedienelemente nicht abgedeckte Steuerungsfunktionen von der Fernbedienung übernommen werden können.

Gemäß Patentanspruch 2 können in vorteilhafter Weise bei gleichem Konzept des Grundgerätes unterschiedliche Geräteversionen angeboten werden, oder es kann ein bereits bestehendes Gerät nachträglich auf Fernbedienung umgerüstet werden.

Das mit dem Fernsteuer-Sender nach Patentanspruch 3 ausgestattete Autoradio hat den Vorteil, daß es auch außerhalb des unmittelbaren Zugriffsbereichs des Fahrers untergebracht werden kann, ohne daß die Bedienung des Gerätes erschwert wird.

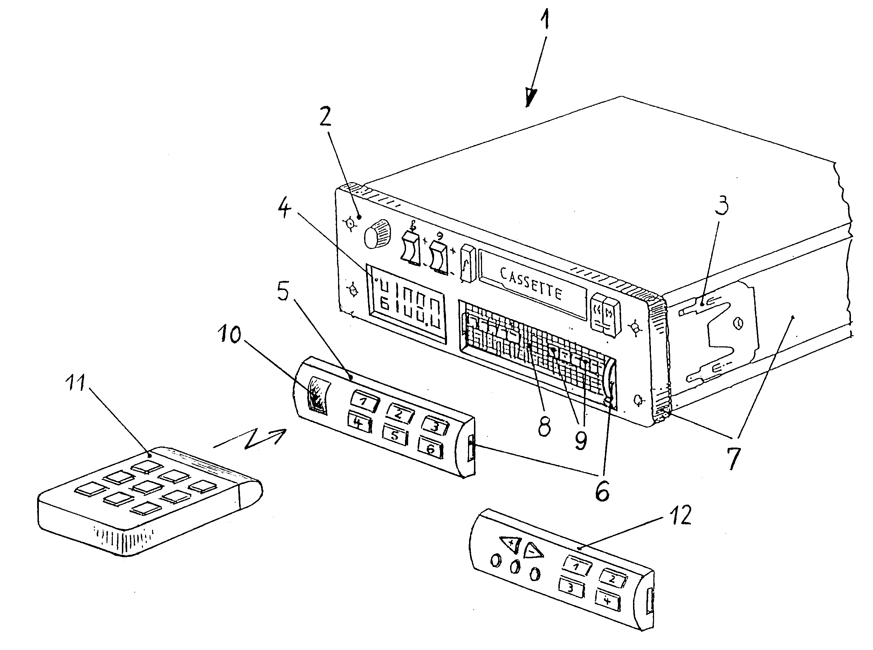

Nachstehend wird die Erfindung anhand der Zeichnung näher erläutert.

Die einzige Figur zeigt die Frontansicht eines Autoradios mit abnehmbarem Bedienteil in alternativer Ausführung sowohl mit als auch ohne Fernbedienung.

Das abgebildete Rundfunkgerät 1 ist als Einschubteil zum Einbau in einem Kraftfahrzeug ausgebildet und weist frontseitig den Bedienungsbereich 2 auf. Bei der Montage im Kraftfahrzeug wird das Gerät beispielsweise in einen vorgegebenen Normausschnitt im Armaturenbrett eingeschoben, wobei es über die frontseitig lösbaren und beidseitig angebrachten Rastfedern 3 fixiert wird. Der Bedienungsbereich 2 fügt sich dann bündig in das Armaturenbrett ein. Er weist neben den zur Bedienung des Gerätes notwendigen Einstellorganen ein Anzeigefeld 4, beispielsweise in Form eines LC-Displays, und einen Kassettenschacht für ein eingebautes Magnetbandlaufwerk auf. Ein Teil der Einstelltasten ist im rechten unteren Teil des Bedienbereiches 2 auf einem leistenförmigen, abnehmbaren Bedienteil 5 untergebracht. Dieses Bedienteil 5 ist über eine mechanische Verriegelung 6 leicht lösbar mit dem Geräte-Hauptteil 7 verbunden. Es taucht beim Einsetzen in eine Vertiefung 8 des Geräte-Hauptteils 7 ein und erhält über die Kontaktstellen 9 seine elektrisch trennbare Verbindung zur geräteinternen zentralen Steuerungs- und Spannungsversorgungseinrichtung. Die Anzahl der Kontaktstellen 9 kann z.B. durch Matrizierung der Tastenabfrage erheblich eingeschränkt werden.

Das abnehmbare Bedienteil 5 enthält erfindungsgemäß einen nicht dargestellten Fernsteuer-Empfänger mit einem Empfangssensor 10. Hierbei kann es sich beispielsweise um einen Infrarot-, Ultraschall- oder Funk-Empfänger bekannter Bauart handeln. Dieser im Innern des Bedienteiles 5 untergebrachte Empfänger erhält seine Versorgungsspannung aus dem Hauptgerät 7 und liefert die decodierten Fernbedienungsbefehle über zugehörige Kontaktstellen 9 an die geräteinterne Steuerungseinrichtung. Der Umfang der zur Fernbedienung vorgesehenden Funktionen kann die Anzahl der durch die Einstelltasten des Bedienteiles 5 vorgegebenen Funktionen sowohl unter- als auch überschreiten. Denkbar ist z.B. auch, daß ein bestimmter Sicherungscode nur über die Fernbedienung eingespeist werden kann.

Als Geber für die drahtlose Fernbedienung dient der Fernsteuer-Sender 11, der an der dem Bedienfeld gegenüberliegenden Außenfläche mit einer leicht lösbaren Haftvorrichtung versehen ist (nicht dargestellt). Diese kann im einfachsten Fall aus einer dünnen Eisenplatte bestehen, deren Gegenstück aus einem kräftigen Permanentmagneten gebildet wird, welcher mit einer einseitig aufgetragenen Klebeschicht an geeigneter Stelle im Kraftfahrzeug angebracht werden kann. Ein geeigneter Platz ist möglicherweise auf der Prallplatte des Lenkradkreuzes im unmittelbaren Zugriffsbereich des Fahrers gegeben. Als alternative Befestigungsmöglichkeiten kommen z.B. eine Klettverschlußkombination, eine Bajonettverriegelung oder eine Schnappvorrichtung in Frage, wobei das mit dem Fahrzeug fest verbundene Teil geklebt oder geschraubt sein kann.

Anstelle des mit Fernsteuer-Empfänger versehenen Bedienteils 5 kann wahlweise ein Bedienteil 12 ohne Fernbedienungsmöglichkeit verwendet werden. Auf diese Weise ist es möglich, eine preiswerte Autoradio-Grundversion anzubieten, die bei Bedarf durch ein mit Fernbedienung ausgestattetes Bedienteil 5 nachträglich aufgerüstet werden kann. Das ohne Fernbedienung konzipierte Bedienteil 12 kann sich hinsichtlich der Tastenausstattung und der Optik sehr wesentlich vom Bedienteil 5 (mit Fernbedienung) unterscheiden, solange es bezüglich der mechanischen Befestigung und der elektrischen Kontaktierung kompatibel ist. Dadurch können in einfacher Weise bei der Geräteherstellung unter Verwendung des gleichen Grundgeräts auch unterschiedliche Geräteversionen produziert werden.

## Patentansprüche

1. Autoradio mit abnehmbarem Bedienteil, dessen Ankopplung an das Geräte-Hauptteil über eine lösbare, mechanische Verriegelung erfolgt und das zur Übertragung der durch die Bedienelemente ausgelösten Befehle mit elektrischen Kontaktstellen versehen ist,
**dadurch gekennzeichnet,** daß
das abnehmbare Bedienteil (5) einen Fernsteuer-Empfänger mit einem Empfangssensor (10) beinhaltet, mit deren Hilfe vereinzelte oder sämtliche, den Bedienelementen des Bedienbereiches (2) zugeordnete oder auch als Zusatzsteuerung ausgewiesene Funktionen mit einem separaten Fernsteuer-Sender (11) fernbedient werden können.

2. Autoradio mit abnehmbarem Bedienteil nach Anspruch 1,
**dadurch gekennzeichnet**, daß
anstelle des abnehmbaren Bedienteils (5) mit integrierter Fernbedienung ein bezüglich der mechanischen Kopplung und der elektrischen Kontaktierung kompatibel ausgeführtes Bedienteil (12) ohne Fernbedienung verwendet werden kann, so daß sich bei gleichem Grundgeräte-Konzept unterschiedliche Geräteversionen realisieren lassen oder eine Nachrüstung eines bereits gefertigten oder ausgelieferten Gerätes mit einer Fernbedienung ermöglicht wird.

3. Autoradio mit abnehmbarem Bedienteil nach Anspruch 1,
**dadurch gekennzeichnet,** daß
der zugehörige Fernsteuer-Sender (11) über eine leicht lösbare Haftverbindung an geeigneter Stelle im Kraftfahrzeug befestigt werden kann.
